# EUROPÄISCHE PATENTSCHRIFT

(11) **EP 3 052 866 B1**
(45) Veröffentlichungstag und Bekanntmachung des Hinweises auf die Patenterteilung: **31.05.2017**
(21) Anmeldenummer: 14780468.6
(22) Anmeldetag: 01.10.2014
(51) Int. Cl.: F24F 3/16, F24F 12/00, B03C 3/014, B03C 3/017, F24F 5/00, B03C 3/019, F24F 11/00, B03C 3/36, F24F 3/14

(54) **LUFTREINIGUNGSGERÄT MIT OZON- UND FEINSTAUBREINIGUNG**
AIR PURIFICATION DEVICE WITH OZONE AND FINE DUST CLEANING
APPAREIL DE PURIFICATION D'AIR À PURIFICATION DE L'OZONE ET DES POUSSIÈRES FINES

(30) Priorität: 01.10.2013 CH 16872013
(43) Veröffentlichungstag der Anmeldung: 10.08.2016
(73) Patentinhaber: Mentus Holding AG, 6330 Cham (CH)
(72) Erfinder: PETERHANS, Adrian, CH-5443 Niederrohrdorf (CH)
(74) Vertreter: Falk, Urs
(86) Internationale Anmeldenummer: PCT/EP2014/071059
(87) Internationale Veröffentlichungsnummer: WO 2015/049297

(56) Entgegenhaltungen:
- EP-A1- 1 440 695
- EP-A1- 1 748 260
- EP-A2- 2 407 727
- DE-A1-102005 047 247
- KR-B1- 100 848 969

## Beschreibung

### Technisches Gebiet

Die Erfindung betrifft ein Luftreinigungsgerät mit Ozon- und Feinstaubreinigung, das in einem Raum installiert und über zwei Leitungen mit der Aussenseite des Gebäudes verbunden wird, um frische Luft aus dem Freien zuzuführen und Abluft in die Umgebung abzuführen. Die Erfindung betrifft weiter ein Luftreinigungsgerät, das zusätzlich mit Heiz-, Kühl- und, fakultativ, Entfeuchtungsfunktion ausgebildet ist.

### Hintergrund der Erfindung

Es sind viele Luftreinigungsgeräte und Klimageräte bekannt. Viele dieser Geräte sind ausgelegt für die Reinigung bzw. Klimatisierung der Luft eines ganzen Gebäudes. Bei Gebäuden wird die Luft häufig in einer Zentrale aufbereitet und über Lüftungsrohre zu den einzelnen Räumen geführt. Bekannt sind auch viele Splittinggeräte, bei denen eine Kühleinheit im Raum montiert, Kompressoren und dergleichen für die Versorgung der Kühleinheit mit Kälte ausserhalb des Gebäudes installiert werden. Solche Klimaanlagen haben den Nachteil, dass sich in den Lüftungskanälen Mikroorganismen aller Art ansammeln und dass die Elektrofilter, die zur Reinigung der Luft von Staub und Feinstaub eingebaut werden, einen schlechten Wirkungsgrad haben, da die Luft mit relativ grosser Strömungsgeschwindigkeit durch die Elektrofilter strömt. Die Reinigung von Feinstaub genügt daher den Anforderungen meistens nicht. EP 1 440 695 offenbart ein Luftreinigungsgerät nach dem Oberbegriff des Anspruchs 1.

### Kurze Beschreibung der Erfindung

Der Erfindung liegt die Aufgabe zugrunde, ein Luftreinigungsgerät zu entwickeln, das die Luft auf effiziente Weise reinigt.

Die Erfindung betrifft ein Luftreinigungsgerät, das ausgebildet ist für die Installation in einem Raum eines Gebäudes und die Reinigung der Luft des Raums, umfassend
einen ersten Einlass, einen zweiten Einlass, einen dritten Einlass, einen ersten Auslass und einen zweiten Auslass, wobei der erste Einlass und der zweite Auslass an Leitungen anschliessbar sind, die zu der Aussenseite des Gebäudes führen, und der erste Auslass, der zweite Einlass und der dritte Einlass in den Raum münden,
einen ersten Luftkanal, der den ersten Einlass mit dem ersten Auslass verbindet,
einen zweiten Luftkanal, der den zweiten Einlass mit dem zweiten Auslass verbindet,
einen ersten Elektrofilter/Ozongenerator, der nach dem ersten Einlass im ersten Luftkanal angeordnet ist,
einen Aktivkohlefilter, der vor dem ersten Auslass im ersten Luftkanal angeordnet ist,
einen Wärmetauscher, der angeordnet ist um Wärme zu tauschen zwischen dem ersten Luftkanal und dem zweiten Luftkanal,
ein erstes Gebläse, das im ersten Luftkanal in Strömungsrichtung nach dem Elektrofilter/Ozongenerator angeordnet ist,
ein zweites Gebläse, das im ersten Luftkanal vor dem Aktivkohlefilter angeordnet ist,
ein drittes Gebläse, das im zweiten Luftkanal angeordnet ist,
einen dritten Luftkanal, der von dem dritten Einlass zu dem ersten Luftkanal führt und an einer Stelle, die nach dem Wärmetauscher und vor dem zweiten Gebläse liegt, in den ersten Luftkanal mündet,
einen zweiten Elektrofilter/Ozongenerator, der nach dem dritten Einlass im dritten Luftkanal angeordnet ist,
eine Steuereinheit, die programmiert ist, in wenigstens einem ersten Betriebsmodus das zweite Gebläse mit einer grösseren Saugleistung zu betreiben als das erste Gebläse, um im ersten Luftkanal zwischen dem zweiten Gebläse und dem ersten Gebläse einen Sog zu erzeugen, der einerseits die von dem ersten Gebläse aus der Umgebung des Gebäudes angesaugte und in den ersten Luftkanal beförderte Aussenluft in Richtung zum Aktivkohlefilter saugt und der andererseits Luft aus dem Raum in den dritten Luftkanal hinein und von dort weiter in den ersten Luftkanal und in Richtung zum Aktivkohlefilter saugt.

Die an die Elektrofilter/ Ozongeneratoren angelegte Hochspannung wird bevorzugt luftgeschwindigkeitsabhängig gesteuert, um eine konstante Feinstaubfilterung bei minimalem Energieverbrauch zu erreichen.

Das erfindungsgemässe Luftreinigungsgerät kann erweitert werden zu einem Raumluftaufbereitungsgerät mit zusätzlicher Heiz-, Kühl- und, fakultativ, Entfeuchtungsfunktion. Ein solches Luftreinigungsgerät umfasst weiter:
eine im Betrieb wasserführende Leitung, die an ein Grundsystem anschliessbar ist, um das Luftreinigungsgerät in einen Heiz/Kühlkreislauf einzubinden,
mehrere Peltierelemente, deren eine Seite in thermischem Kontakt mit der an das wasserführende Grundsystem angeschlossenen Leitung ist und deren zweite Seite in thermischem Kontakt mit Kühllamellen ist, die in den ersten Luftkanal hineinragen, wobei die Steuereinheit programmiert ist, um in einem Heizmodus ein erstes oder eine erste Gruppe der Peltierelemente zum Pumpen von Wärme von der wasserführenden Leitung in den ersten Luftkanal anzusteuern, und
   in einem Kühlmodus das erste oder die erste Gruppe der Peltierelemente zum Pumpen von Wärme von dem ersten Luftkanal zu der wasserführenden Leitung anzusteuern.

Die Steuereinheit kann weiter programmiert sein, wenigstens ein zweites oder eine zweite Gruppe der Peltierelemente zum Abkühlen der angeschlossenen Kühllamellen unterhalb den Taupunkt der vorbeiströmenden Luft anzusteuern.

Das Luftreinigungsgerät kann weiter einen CO₂ Sensor umfassen und die Steuereinheit programmiert sein, die Drehzahl des ersten Gebläses und die Drehzahl des zweiten Gebläses entsprechend einem Ausgangssignal des CO₂ Sensors zu steuern.

Das Luftreinigungsgerät kann weiter einen Feuchtigkeitssensor umfassen und die Steuereinheit programmiert sein, die Drehzahl des ersten Gebläses und die Drehzahl des zweiten Gebläses entsprechend einem Ausgangssignal des Feuchtigkeitssensors zu steuern.

Wenn das Luftreinigungsgerät sowohl den CO₂ Sensor als auch den Feuchtigkeitssensor umfasst, dann ist die Steuereinheit programmiert, die Drehzahl des ersten Gebläses und die Drehzahl des zweiten Gebläses entsprechend einem Ausgangssignal des Feuchtigkeitssensors und einem Ausgangssignal des CO₂ Sensors zu steuern.

Dabei bleibt die Drehzahl des ersten Gebläses grösser als die Drehzahl des zweiten Gebläses. Die Drehzahl des dritten Gebläses kann auch erhöht werden, um gleich viel Abluft abzuführen, wie Frischluft zugeführt wird. Diese Steuerung ermöglicht es, den Anteil der Frischluft, die dem Raum zugeführt wird, zu erhöhen und dementsprechend mehr Abluft und damit unerwünschtes CO₂ bzw. unerwünschte Feuchtigkeit aus dem Raum abzuführen.

### Beschreibung der Figuren

Die Erfindung wird nachfolgend anhand von Ausführungsbeispielen und anhand der Zeichnung näher erläutert. Die Figuren sind schematisch dargestellt.

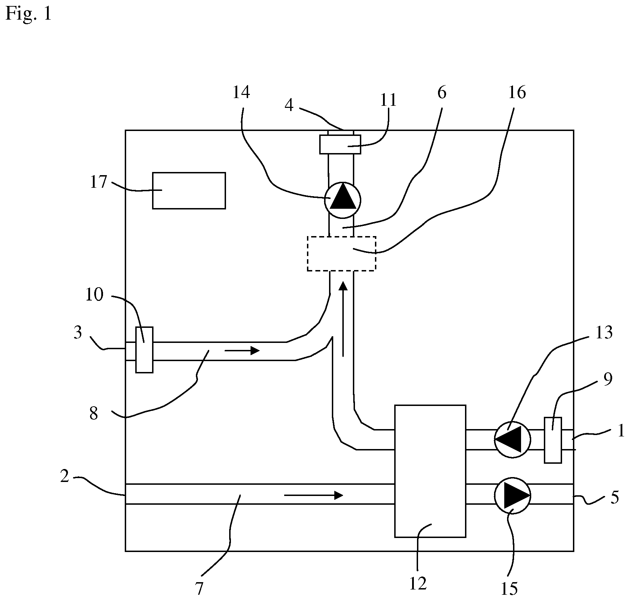

- Fig. 1: zeigt ein Schema eines erfindungsgemässen Luftreinigungsgeräts, und
- Fig. 2: zeigt ein Schema eines erfindungsgemässen Luftreinigungsgeräts mit zusätzlicher Heiz-, Kühl- und Entfeuchtungsfunktion.

### Detaillierte Beschreibung der Erfindung

Die Fig. 7 zeigt ein Schema eines erfindungsgemässen Luftreinigungsgeräts, das ausgebildet ist für die Installation in einem Raum eines Gebäudes und die Reinigung der Luft des Raums. Das Luftreinigungsgerät umfasst einen ersten Einlass 1, einen zweiten Einlass 2, einen dritten Einlass 3, einen ersten Auslass 4 und einen zweiten Auslass 5. Das Luftreinigungsgerät wird über zwei Leitungen mit der Aussenseite des Gebäudes verbunden: Eine erste (nicht dargestellte) Leitung verbindet den ersten Einlass 1 mit der Aussenseite des Gebäudes, eine zweite (nicht dargestellte) Leitung verbindet den zweiten Auslass 5 mit der Aussenseite des Gebäudes. Der erste Auslass 4, der zweite Einlass 2 und der dritte Einlass 3 münden in den Raum, vorzugsweise an räumlich voneinander getrennten Stellen. Das Luftreinigungsgerät umfasst weiter einen ersten Luftkanal 6, einen zweiten Luftkanal 7 und einen dritten Luftkanal 8. Die Strömungsrichtung der Luft in den Luftkanälen 6 - 8 ist durch Pfeile dargestellt. Der erste Luftkanal 6 verbindet den ersten Einlass 1 mit dem ersten Auslass 4. Der zweite Luftkanal 7 verbindet den zweiten Einlass 2 mit dem zweiten Auslass 5. Der dritte Luftkanal 8 führt von dem dritten Einlass 3 zu dem ersten Luftkanal 6. Ein erster Elektrofilter/Ozongenerator 9 ist nach dem ersten Einlass 1, d.h. in Strömungsrichtung nach dem ersten Einlass 1, im ersten Luftkanal 6 und ein zweiter Elektrofilter/ Ozongenerator 10 ist nach dem dritten Einlass 3, d.h. in Strömungsrichtung nach dem dritten Einlass 3, im dritten Luftkanal 8 angeordnet. Ein Aktivkohlefilter 11 ist im ersten Luftkanal 6 vor dem ersten Auslass 4 angeordnet. Der erste Luftkanal 6 und der zweite Luftkanal 7 führen durch einen Wärmetauscher 12, um Wärme zu tauschen zwischen dem ersten Luftkanal 6 und dem zweiten Luftkanal 7. Ein erstes Gebläse 13 ist im ersten Luftkanal 6 in Strömungsrichtung nach dem ersten Elektrofilter/ Ozongenerator 9, ein zweites Gebläse 14 ist im ersten Luftkanal 6 in Strömungsrichtung vor dem Aktivkohlefilter 11 und ein drittes Gebläse 15 ist im zweiten Luftkanal 7 in Strömungsrichtung nach dem Wärmetauscher 12 angeordnet. Der dritte Luftkanal 8 führt von dem dritten Einlass 3 zu dem ersten Luftkanal 6 und mündet an einer Stelle, die nach dem Wärmetauscher 12 und vor dem zweiten Gebläse 14 liegt, in den ersten Luftkanal 6. Der erste Luftkanal 6 ist somit unterteilt in zwei Abschnitte, nämlich einen ersten Abschnitt, der vom ersten Einlass 1 bis zu der Stelle führt, an der der dritte Luftkanal 8 in den ersten Luftkanal 6 mündet, und einen zweiten Abschnitt, der von dieser Stelle bis zum ersten Auslass 4 führt. Im ersten Abschnitt strömt nur Frischluft, im zweiten Abschnitt strömen Frischluft und Umluft. Bei jedem Einlass kann ein Grobfilter angeordnet sein.

Im zweiten Abschnitt des ersten Luftkanals 6 kann vor oder nach dem zweiten Gebläse 14 optional ein Befeuchtungsmodul 16 eingebaut sein. Das optionale Befeuchtungsmodul 16 ist bevorzugt mit einem von Hand nachfüllbaren Wassertank ausgerüstet, es kann aber auch an eine Wasserleitung anschliessbar ausgebildet sein.

Da das Luftreinigungsgerät für die Installation in einem Raum ausgelegt ist, und somit nur für die gute Luftqualität in einem einzigen Raum zu sorgen hat, ist der Bedarf an Frischluft viel kleiner als wenn das Luftreinigungsgerät für die Versorgung einer ganzen Wohnung oder eines Gebäudes mit gereinigter Luft ausgelegt wäre. Das Luftreinigungsgerät ist somit für eine Obergrenze an Frischluft ausgelegt, die typischerweise bei etwa 60 m³/h liegt. Dies hat eine relativ geringe Strömungsgeschwindigkeit der Luft im Luftreinigungsgerät zur Folge.

Das Luftreinigungsgerät umfasst weiter eine Steuereinheit 17. Die Steuereinheit 17 ist eingerichtet, das Luftreinigungsgerät in mindestens einem ersten Betriebsmodus zu betreiben, vorzugsweise in mehreren Betriebsmodi. Diese werden nachfolgend erläutert.

### Betriebsmodus 1

Der erste Betriebsmodus dient dazu, frische Luft in den Raum zu bringen und verbrauchte Luft aus dem Raum heraus zu befördern, sowie einen Anteil der Luft im Raum erneut zu reinigen. Die Steuereinheit 17 ist programmiert, das zweite Gebläse 14 in diesem Betriebsmodus immer mit einer grösseren Saugleistung als das erste Gebläse 13 zu betreiben. Das zweite Gebläse 14 erzeugt deshalb im ersten Luftkanal 6 einen Sog, der die vom ersten Gebläse 13 aus der Umgebung des Gebäudes angesaugte und in den ersten Luftkanal 6 beförderte Luft in Richtung zum Aktivkohlefilter 11 saugt. Dieser Sog hat erstens zur Folge, dass das vom ersten Elektrofilter/Ozongenerator 9 erzeugte Ozon zum Aktivkohlefilter 11 strömt, wo es zerstört wird, und dass kein Ozon in den dritten Luftkanal 8 einströmt und durch den dritten Einlass 3 in den Raum gelangt. Dieser Sog hat zweitens zur Folge, dass Luft aus dem Raum in den dritten Luftkanal 8 und von dort weiter in den ersten Luftkanal 6 hineingesaugt wird. Die aus dem Raum gesaugte Luft wird im zweiten Elektrofilter/Ozongenerator 10 von Staub, insbesondere Feinstaub, und dergleichen gereinigt und mit Ozon angereichert. Die aus dem Raum gesaugte Luft und die angesaugte Aussenluft werden zusammengeführt, im Aktivkohlefilter 11 wieder vom Ozon befreit und in den Raum befördert. Dem Raum wird auf diese Weise ein Anteil Frischluft und ein Anteil Umluft zugeführt.

Je grösser die Differenz zwischen der Saugleistung des zweiten Gebläses 14 und der Saugleistung des ersten Gebläses 13 ist, desto grösser ist der Anteil der Umluft im Verhältnis zur Frischluft. Die Umluft wird beim Eintritt in den dritten Luftkanal 8 im zweiten Elektrofilter 10 von Staub, Feinstaub, Pollen befreit und mit Ozon angereichert. Das überall im dritten Luftkanal 8 und im ersten Luftkanal 6 vorhandene Ozon zerstört in der Umluft enthaltene Mikroorganismen wie beispielsweise Bakterien, Parasiten, Pilze, Protzoen, Viren etc.

Die Steuereinheit 17 betreibt zudem das dritte Gebläse 15 mit einer Saugleistung, die typischerweise etwa der Saugleistung des ersten Gebläses 13 entspricht, um etwa die gleiche Menge an Raumluft ins Freie zu befördern wie Frischluft mittels des ersten Gebläses 13 in den Raum befördert wird. Dabei wird die in der Raumluft enthaltene Wärme oder Kühle im Wärmetauscher 12 an die Frischluft abgegeben.

### Betriebsmodus 2

Die Steuereinheit 17 betreibt das erste Gebläse 13 und das zweite Gebläse 14 wie im Betriebsmodus 1, während das dritte Gebläse 15 ausgeschaltet ist. Da praktisch keine Luft über den zweiten Luftkanal 7 abgeführt wird, sucht sich ein Anteil der Luft im Raum andere Wege ins Freie und entweicht über Ritzen in Fenstern und Türen. Da somit praktisch keine Abluft durch den Wärmetauscher 12 strömt, findet im Wärmetauscher 12 kein Wärmetausch statt. Wenn die zugeführte Frischluft kälter ist als die Luft im Raum, dann sinkt die Temperatur der Luft im Raum. Wenn die zugeführte Frischluft wärmer ist als die Luft im Raum, dann erhöht sich die Temperatur der Luft im Raum.

### Betriebsmodus 3

Die Steuereinheit 17 betreibt nur das zweite Gebläse 14. Das erste Gebläse 13 und das dritte Gebläse 15 sind ausgeschaltet. Dieser Betriebsmodus dient dazu, die Luft im Raum zu reinigen, ohne Frischluft zuzuführen.

In allen Betriebsmodi ist also die Saugleistung des zweiten Gebläses 14 grösser als die Saugleistung des ersten Gebläses 13. (Dies ist selbstverständlich so, wenn das erste Gebläse 13 ausgeschaltet ist).

Falls das optionale Befeuchtungsmodul 16 in den ersten Luftkanal 6 eingebaut ist, sind weitere Betriebsmodi möglich, bei denen die Luft vor dem Austritt aus dem ersten Luftkanal 6 befeuchtet wird.

Das erfindungsgemässe Luftreinigungsgerät bietet einige besondere Vorteile, darunter
- Die Elektrofilter/Ozongeneratoren arbeiten mit hohem Wirkungsgrad, da die Luftströmung mit maximal 60 m³/h relativ gering ist, so dass die Luft eine ausreichend lange Verweilzeit im Elektrofilter/Ozongenerator hat.
- Die Raumluft hat einen hohen Reinheitsgrad, da Feinstaub wirksam aus der Luft entfernt und Mikroorganismen aller Art durch das Ozon abgetötet werden. Dies gilt sowohl für die Frischluft als auch für die Umluft. Dies führt sogar dazu, dass die aus dem Raum abgeführte Abluft sauberer ist als die Luft in der Umgebung des Gebäudes.
- Im Aktivkohlefilter wird das Ozon, auch das aus dem Freien mit der Frischluft zugeführte Ozon, vollständig abgebaut, so dass die dem Raum zugeführte Luft praktisch ozonfrei ist.
- Die Frischluft und die Umluft können zusammengeführt werden in den gleichen Luftkanal, ohne dass Ozon in den Raum gelangt. Dies reduziert die Anzahl der für die Luftführung erforderlichen Rohre und Kanäle und vereinfacht somit die Luftführung deutlich.
- Der Wärmetausch im Wärmetauscher 12 kann bei Bedarf ohne Verwendung von Klappen oder eines den Wärmetauscher 12 umgehenden Bypasses unterbunden werden, nämlich durch Ausschalten des dritten Gebläses 15.
- Da die Elektrofilter/Ozongeneratoren 9 und 10 unmittelbar nach dem ersten Einlass 1 bzw. dritten Einlass 3 und der Aktivkohlefilter 11 unmittelbar vor dem ersten Auslass 4 angeordnet sind, sind die drei Luftkanäle 6 - 8 im Betrieb immer mit Ozon angereichert, so dass in die Luftkanäle gelangende Mikroorganismen wie beispielsweise Bakterien, Parasiten, Pilze, Protzoen, Viren etc. sofort zerstört werden. Der im ersten Luftkanal 6 und im dritten Luftkanal 8 permanent herrschende Sog bewirkt, dass kein Ozon in den dritten Luftkanal 8 einströmt und durch den dritten Einlass 3 in den Raum gelangt.

Die Elektrofilter/ Ozongeneratoren 9 und 10 haben eine Sprühelektrode und wenigstens eine Abscheidelektrode. Die an die Sprühelektrode angelegte Hochspannung wird mit Vorteil in Abhängigkeit der Luftgeschwindigkeit gesteuert oder geregelt. Auf diese Weise wird eine konstante Feinstaubfilterung bei minimalem Energieverbrauch erreicht.

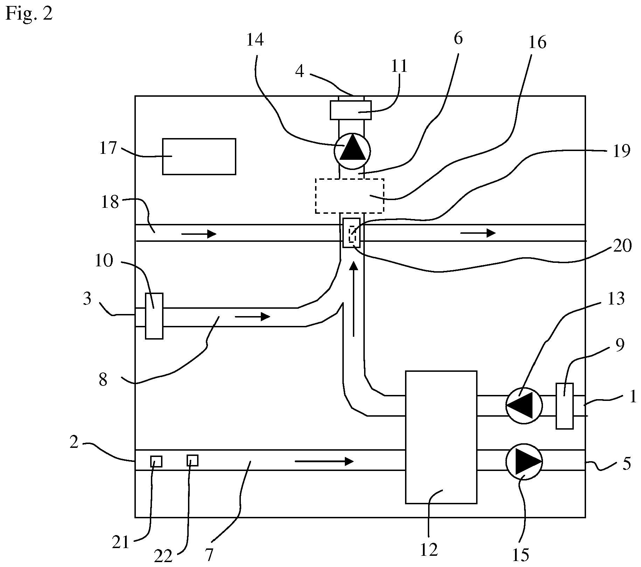

Die Fig. 2 zeigt ein Schema eines erfindungsgemässen Luftaufbereitungsgeräts, das zusätzlich an ein wasserführendes Grundsystem anschliessbar ist und mit Peltierelementen zum Heizen, Kühlen und, fakultativ, Entfeuchten der dem Raum zugeführten Luft ausgebildet ist und deshalb auch als Raumluftaufbereitungsgerät bezeichnet werden kann. Das Luftreinigungsgerät umfasst zusätzlich eine im Betrieb wasserführende Leitung 18, die an ein Grundsystem anschliessbar ist, um das Luftreinigungsgerät in einen Heiz/Kühlkreislauf einzubinden und mit temperiertem Wasser zu versorgen, und mehrere Peltierelemente 19, deren eine Seite in thermischem Kontakt mit der an das wasserführende Grundsystem angeschlossenen Leitung 18 und deren andere Seite in thermischem Kontakt mit Kühllamellen 20 ist, die in den ersten Luftkanal hineinragen. Die an die Peltierelemente 19 angeschlossenen Kühllamellen 20 befinden sich im ersten Luftkanal 6, bevorzugt wie dargestellt in Strömungsrichtung der Luft nach der Stelle, wo der dritte Luftkanal 8 in den ersten Luftkanal 6 mündet. Die Steuereinheit 17 ist zusätzlich programmiert, um in einem Heizmodus ein erstes oder eine erste Gruppe der Peltierelemente 19 zum Pumpen von Wärme von der wasserführenden Leitung 18 in den ersten Luftkanal 6 anzusteuern und in einem Kühlmodus das erste oder die erste Gruppe der Peltierelemente 19 zum Pumpen von Wärme von dem ersten Luftkanal 6 zu der wasserführenden Leitung 18 anzusteuern. Das Grundsystem enthält ein zentrales Gerät, das eingerichtet ist, das im Heiz/Kühlkreislauf zirkulierende Wasser je nach Bedarf zu erwärmen und fakultativ auch zu kühlen. Die Steuereinheit 17 ist bevorzugt auch programmiert, dem Grundsystem die Temperatur anzugeben, die das im Heiz/Kühlkreislauf zirkulierende Wasser aufweisen soll.

Die Steuereinheit 17 kann zusätzlich programmiert sein, um ein zweites oder eine zweite Gruppe der Peltierelemente 19 zum Abkühlen der angeschlossenen Kühllamellen 20 unterhalb den Taupunkt der vorbeiströmenden Luft anzusteuern, um die vorbeiströmende Luft zu entfeuchten. Diese Art der Entfeuchtung bewirkt auch eine Kühlung der Luft. Wenn die Kühlung unerwünscht ist, dann kann das erste oder die erste Gruppe der Peltierelemente 19 benutzt werden, um die Luft wieder zu erwärmen.

Das Luftreinigungsgerät kann weiter einen CO₂ Sensor 21 umfassen, der mit Vorteil im zweiten Luftkanal 7 angeordnet ist. Die Steuereinheit 17 ist dann mit Vorteil programmiert, die Drehzahl des ersten Gebläses 13 und die Drehzahl des zweiten Gebläses 14 entsprechend einem Ausgangssignal des CO₂ Sensors 21 zu steuern. Die Drehzahl zumindest der beiden Gebläse 13 und 14, mit Vorteil aller drei Gebläse 13 bis 15 wird erhöht, wobei die Drehzahl des ersten Gebläses 13 grösser bleibt als die Drehzahl des zweiten Gebläses 14, um den Anteil der Frischluft, die dem Raum zugeführt wird, zu erhöhen und dementsprechend mehr Abluft aus dem Raum abzuführen. Diese Steuerung führt dazu, dass die CO₂ Konzentration im Raum absinkt. Dies ermöglicht eine energieeffiziente und bedarfsabhängige Aufbereitung der Raumluft.

Das Luftreinigungsgerät kann weiter einen Feuchtigkeitssensor 22 umfassen, der mit Vorteil im zweiten Luftkanal 7 angeordnet ist. Die Steuereinheit 17 ist dann mit Vorteil programmiert, die Drehzahl des ersten Gebläses 13 und die Drehzahl des zweiten Gebläses 14 entsprechend einem Ausgangssignal des Feuchtigkeitssensors 22 und/oder dem Ausgangssignal des CO₂ Sensors 21 zu steuern. Die Drehzahl zumindest der beiden Gebläse 13 und 14, mit Vorteil aller drei Gebläse 13 bis 15 wird erhöht, wobei die Drehzahl des ersten Gebläses 13 grösser bleibt als die Drehzahl des zweiten Gebläses 14, um den Anteil der Frischluft, die dem Raum zugeführt wird, zu erhöhen und dementsprechend mehr Abluft und damit unerwünschtes CO₂ bzw. unerwünschte Feuchtigkeit aus dem Raum abzuführen. Die Drehzahl des dritten Gebläses 15 kann auch erhöht werden, um gleich viel Abluft abzuführen, wie Frischluft zugeführt wird.

Das anhand der Fig. 2 beschriebene Luftreinigungsgerät ermöglicht die energieeffiziente, benutzerabhängige Raumluftaufbereitung, bei der die fünf relevanten Raumluftqualitätsparameter Temperatur, Feuchtigkeit, CO₂ Konzentration, Ozonkonzentration und Feinstaubgehalt der Luft optimiert werden. Ein Gerät dieser Art ist bisher auf dem Markt nicht erhältlich.

Während Ausführungsformen dieser Erfindung gezeigt und beschrieben wurden, ist es für den Fachmann ersichtlich, dass mehr Modifikationen als oben erwähnt möglich sind, Die Erfindung ist daher nur durch die Ansprüche beschränkt.

## Patentansprüche

1. Luftreinigungsgerät, das ausgebildet ist für die Installation in einem Raum eines Gebäudes und die Reinigung der Luft des Raums, umfassend
einen ersten Einlass (1), einen zweiten Einlass (2), einen dritten Einlass (3), einen ersten Auslass (4) und einen zweiten Auslass (5), wobei der erste Einlass (1) und der zweite Auslass (5) an Leitungen anschliessbar sind, die zu der Aussenseite des Gebäudes führen, und der erste Auslass (4), der zweite Einlass (2) und der dritte Einlass (3) in den Raum münden,
einen ersten Luftkanal (6), der den ersten Einlass (1) mit dem ersten Auslass (4) verbindet,
einen zweiten Luftkanal (7), der den zweiten Einlass (2) mit dem zweiten Auslass (5) verbindet, einen ersten Elektrofilter/Ozongenerator (9), der nach dem ersten Einlass (1) im ersten Luftkanal (6) angeordnet ist,
einen Aktivkohlefilter (11), der vor dem ersten Auslass (4) im ersten Luftkanal (6) angeordnet ist, **gekennzeichnet durch** einen Wärmetauscher (12), der angeordnet ist um Wärme zu tauschen zwischen dem ersten Luftkanal (6) und dem zweiten Luftkanal (7),
ein erstes Gebläse (13), das im ersten Luftkanal (6) in Strömungsrichtung nach dem Elektrofilter/Ozongenerator (9) angeordnet ist,
ein zweites Gebläse (14), das im ersten Luftkanal (6) vor dem Aktivkohlefilter (11) angeordnet ist, ein drittes Gebläse (15), das im zweiten Luftkanal (7) angeordnet ist,
einen dritten Luftkanal (8), der von dem dritten Einlass (3) zu dem ersten Luftkanal (6) führt und an einer Stelle, die nach dem Wärmetauscher (12) und vor dem zweiten Gebläse (14) liegt, in den ersten Luftkanal (6) mündet,
einen zweiten Elektrofilter/Ozongenerator (10), der nach dem dritten Einlass (3) im dritten Luftkanal (8) angeordnet ist,
eine Steuereinheit (17), die programmiert ist, in wenigstens einem ersten Betriebsmodus das zweite Gebläse (14) mit einer grösseren Saugleistung zu betreiben als das erste Gebläse (13), um im ersten Luftkanal (6) zwischen dem zweiten Gebläse (14) und dem ersten Gebläse (13) einen Sog zu erzeugen, der einerseits die von dem ersten Gebläse (13) aus der Umgebung des Gebäudes angesaugte und in den ersten Luftkanal (6) beförderte Aussenluft in Richtung zum Aktivkohlefilter (11) saugt und der andererseits Luft aus dem Raum in den dritten Luftkanal (8) hinein und von dort weiter in den ersten Luftkanal (6) und in Richtung zum Aktivkohlefilter (11) saugt.

2. Luftreinigungsgerät nach Anspruch 1, weiter umfassend
eine im Betrieb wasserführende Leitung (18), die an ein Grundsystem anschliessbar ist, um das Luftreinigungsgerät in einen Heiz/Kühlkreislauf einzubinden,
mehrere Peltierelemente (19), deren eine Seite in thermischem Kontakt mit der an das wasserführende Grundsystem angeschlossenen Leitung (18) ist und deren zweite Seite in thermischem Kontakt mit Kühllamellen (20) ist, die in den ersten Luftkanal (6) hineinragen, wobei die Steuereinheit (17) programmiert ist, um
in einem Heizmodus ein erstes oder eine erste Gruppe der Peltierelemente (19) zum Pumpen von Wärme von der wasserführenden Leitung (18) in den ersten Luftkanal (6) anzusteuern, und
in einem Kühlmodus das erste oder die erste Gruppe der Peltierelemente (19) zum Pumpen von Wärme von dem ersten Luftkanal (6) zu der wasserführenden Leitung (18) anzusteuern.

3. Luftreinigungsgerät nach Anspruch 2, wobei die Steuereinheit (17) programmiert ist, um ein zweites oder eine zweite Gruppe der Peltierelemente (19) zum Abkühlen der angeschlossenen Kühllamellen (20) unterhalb den Taupunkt der vorbeiströmenden Luft anzusteuern.

4. Luftreinigungsgerät nach einem der Ansprüche 1 bis 3, weiter umfassend einen CO₂ Sensor (21), wobei die Steuereinheit (17) programmiert ist, die Drehzahl des ersten Gebläses (13) und die Drehzahl des zweiten Gebläses (14) entsprechend einem Ausgangssignal des CO₂ Sensors (21) zu steuern.

5. Luftreinigungsgerät nach einem der Ansprüche 1 bis 4, weiter umfassend einen Feuchtigkeitssensor (22), wobei die Steuereinheit (17) programmiert ist, die Drehzahl des ersten Gebläses (13) und die Drehzahl des zweiten Gebläses (14) entsprechend einem Ausgangssignal des Feuchtigkeitssensors (22) und/oder einem Ausgangssignal des CO₂ Sensors (21) zu steuern.

6. Luftreinigungsgerät nach einem der Ansprüche 1 bis 5, wobei die Steuereinheit programmiert ist, die an die Elektrofilter/Ozongeneratoren (9, 10) angelegte Hochspannung luftgeschwindigkeitsabhängig zu steuern.

## Claims

1. Air purification device, which is formed for installation in a room of a building and for cleaning the air of the room, comprising
a first inlet (1), a second inlet (2), a third inlet (3), a first outlet (4) and a second outlet (5), wherein the first inlet (1) and the second outlet (5) can be connected to conduits which lead to the exterior side of the building, and the first outlet (4), the second inlet (2) and the third inlet (3) open into the room,
a first air channel (6), which connects the first inlet (1) to the first outlet (4),
a second air channel (7), which connects the second inlet (2) to the second outlet (5),
a first electric filter/ozone generator (9), which is arranged in the first air channel (6) after the first inlet (1),
an active carbon filter (11), which is arranged before the first outlet (4) in the first air channel (6),
**characterised by**
a heat exchanger (12), which is arranged to exchange heat between the first air channel (6) and the second air channel (7),
a first fan (13), which is arranged in the first air channel (6) in the direction of flow after the electric filter/ozone generator (9),
a second fan (14), which is arranged in the first air channel (6) before the active carbon filter (11),
a third fan (15), which is arranged in the second air channel (7),
a third air channel (8), which leads from the third inlet (3) to the first air channel (6) and opens into the first air channel (6) at a point which lies after the heat exchanger (12) and before the second fan (14),
a second electric filter/ozone generator (10), which is arranged after the third inlet (3) in the third air channel (8),
a control unit (17), which is programmed, in at least one first operating mode, to operate the second fan (14) with a higher suction power than the first fan (30) in order to produce suction in the first air channel (6) between the second fan (14) and the first fan (13), which suction sucks outdoor air sucked by the first fan (30) from the ambient environment of the building and conveyed into the first air channel (6) in the direction toward the active carbon filter (11) on the one hand, and which sucks air from the room into the third air channel (8) and from there further into the first air channel (6) and in the direction toward the active carbon filter (11) on the other hand.

2. Air purification device according to claim 1, further comprising
a pipe (18) which carries water in operation and which is connectable to a basic system in order to integrate the air purification device into a heating/cooling circuit,
several Peltier elements (19), whose one side is in thermal contact with the pipe (18) connected to the water-carrying basic system and whose second side is in thermal contact with cooling fins (20) which protrude into the first air channel (6), wherein the control unit (17) is programmed to trigger, in a heating mode, a first or a first group of the Peltier elements (19) for pumping heat from the water-carrying pipe (18) into the first air channel (6), and
to trigger, in a cooling mode, the first or the first group of the Peltier elements (19) for pumping heat from the first air channel (6) to the water-carrying pipe (18).

3. Air purification device according to claim 2, wherein the control unit (17) is programmed to trigger a second or a second group of the Peltier elements (19) for cooling the connected cooling fins (20) beneath the dew point of the air passing by.

4. Air purification device according to any of claims 1 to 3, further comprising a CO₂ sensor (21), wherein the control unit (17) is programmed to control the speed of the first fan (13) and the speed of the second fan (14) according to an output signal of the CO₂ sensor (21).

5. Air purification device according to any of claims 1 to 4, further comprising a humidity sensor (22), wherein the control unit (17) is programmed to control the speed of the first fan (13) and the speed of the second fan (14) according to an output signal of the humidity sensor (22) and/or an output signal of the CO₂ sensor (21).

6. Air purification device according to any of claims 1 to 5, wherein the control unit is programmed to control the high voltage applied to the electric filters/ozone generators (9, 10) dependent on the velocity of the air.

## Revendications

1. Appareil de purification de l'air, conçu pour être installé dans une pièce d'un bâtiment et pour purifier l'air de la pièce, comprenant
une première entrée (1), une deuxième entrée (2), une troisième entrée (3), une première sortie (4) et une deuxième sortie (5), la première entrée (1) et la deuxième sortie (5) pouvant être raccordées à des conduites qui mènent à l'extérieur du bâtiment et la première sortie (4), la deuxième entrée (2) et la troisième entrée (3) débouchant dans la pièce,
un premier canal d'air (6) qui relie la première entrée (1) à la première sortie (4),
un deuxième canal d'air (7) qui relie la deuxième entrée (2) à la deuxième sortie (5), un premier électrofiltre/générateur d'ozone (9) qui est monté après la première entrée (1) dans le premier canal d'air (6),
un filtre à charbon actif (11) disposé avant la première sortie (4) dans le premier canal d'air (6),
**caractérisé par**
un échangeur de chaleur (12) disposé de façon à échanger de la chaleur entre le premier canal d'air (6) et le deuxième canal d'air (7),
une première soufflerie (13), disposée dans le premier canal d'air (6) après l'électrofiltre/générateur d'ozone (9) dans le sens d'écoulement,
une deuxième soufflerie (14) disposée dans le premier canal d'air (6) avant le filtre à charbon actif (11),
une troisième soufflerie (15) disposée dans le deuxième canal d'air (7),
un troisième canal d'air (8) qui mène de la troisième entrée (3) au premier canal d'air (6) et débouche dans le premier canal d'air (6) à un endroit qui se trouve après l'échangeur de chaleur (12) et avant la deuxième soufflerie (14),
un deuxième électrofiltre/générateur d'ozone (10) disposé après la troisième entrée (3) dans le troisième canal d'air (8),
une unité de commande (17) programmée pour faire fonctionner la deuxième soufflerie (14), dans un premier mode de fonctionnement, avec une plus grande puissance d'aspiration que la première soufflerie (13), afin de créer dans le premier canal d'air (6) entre la deuxième soufflerie (14) et la première soufflerie (13) un appel d'air qui aspire, d'une part, l'air extérieur aspiré par la première soufflerie (13) dans l'environnement du bâtiment et acheminé dans le premier canal d'air (6) en direction du filtre à charbon actif (11), et d'autre part de l'air de la pièce dans le troisième canal d'air (8) et de là dans le premier canal d'air (6) et en direction du filtre à charbon actif (11).

2. Appareil de purification de l'air selon la revendication 1, comprenant en outre une conduite (18) acheminant de l'eau en fonctionnement, qui peut être raccordée à un système de base afin d'intégrer l'appareil de purification de l'air dans un circuit de chauffage et de refroidissement,
plusieurs éléments Peltier (19) dont un côté est en contact thermique avec la conduite (18) raccordée au système de base acheminant de l'eau et dont le deuxième côté est en contact thermique avec des ailettes de refroidissement (20) qui dépassent dans le premier canal d'air (6), l'unité de commande (17) étant programmée pour
commander, dans un mode de chauffage, un premier élément ou un premier groupe d'éléments Peltier (19) pour pomper de la chaleur de la conduite acheminant de l'eau (18) dans le premier canal d'air (6) et
dans un mode de refroidissement, commander le premier élément ou le premier groupe d'éléments Peltier (19) pour pomper de la chaleur du premier canal d'air (6) vers la conduite acheminant de l'eau (18).

3. Appareil de purification de l'air selon la revendication 2, dans lequel l'unité de commande (17) est programmée pour commander un deuxième élément ou un deuxième groupe d'éléments Peltier (19) pour refroidir les ailettes de refroidissement (20) raccordées en dessous du point de rosée de l'air circulant.

4. Appareil de purification de l'air selon l'une des revendications 1 à 3, comprenant en outre un capteur de CO₂ (21), l'unité de commande (17) étant programmée pour commander la vitesse de rotation de la première soufflerie (13) et la vitesse de rotation de la deuxième soufflerie (14) en fonction d'un signal de sortie du capteur de CO₂ (21).

5. Appareil de purification de l'air selon l'une des revendications 1 à 4, comprenant en outre un capteur d'humidité (22), l'unité de commande (17) étant programmée pour commander la vitesse de rotation de la première soufflerie (13) et la vitesse de rotation de la deuxième soufflerie (14) en fonction d'un signal de sortie du capteur d'humidité (22) et/ou d'un signal de sortie du capteur de CO₂ (21).

6. Appareil de purification de l'air selon l'une des revendications 1 à 5, dans lequel l'unité de commande est programmée pour commander la haute tension appliquée aux électrofiltres/générateurs d'ozone (9, 10) en fonction de la vitesse de l'air.
